Europäisches Patentamt

European Patent Office

Office européen des brevets

(19)

(11) Publication number: 0 138 402
A2

(12) # EUROPEAN PATENT APPLICATION

(21) Application number: 84306337.1

(22) Date of filing: 17.09.84

(51) Int. Cl.⁴: G 01 N 27/28, A 61 B 5/00

(30) Priority: 16.09.83 GB 8324874

(43) Date of publication of application: 24.04.85
Bulletin 85/17

(84) Designated Contracting States: AT BE CH DE FR GB IT
LI LU NL SE

(71) Applicant: Cuschieri, Alfred, Department of Surgery
Ninewells Hospital and Medical School, Dundee
Scotland (GB)
Applicant: Tulley, Francis Mark, Ninewells Hospital and
Medical School, Dundee Scotland (GB)

(72) Inventor: Cuschieri, Alfred, Department of Surgery
Ninewells Hospital and Medical School, Dundee
Scotland (GB)
Inventor: Tulley, Francis Mark, Ninewells Hospital and
Medical School, Dundee Scotland (GB)

(74) Representative: Adams, William Gordon et al,
RAWORTH, MOSS & COOK 36 Sydenham Road, Croydon
Surrey CR0 2EF (GB)

(54) A method and apparatus for monitoring pH values.

(57) Apparatus for monitoring the pH value of a substance, such as oesophageal pH of a person. The apparatus comprises means for measuring pH values, which is positioned in use in the oesophagus, and for providing digital output signal representative thereof. A portable data logging apparatus adapted to be carried by the person being monitored includes a store for storing the digital values at predetermined intervals and means is provided for analysing the stored signals during a defined period to provide a pH characteristic of the substance being monitored over the period.

A method and apparatus for monitoring pH values

This invention relates to a method and apparatus for monitoring the pH values of a substance.

One such use is in monitoring oesophageal pH in the investigation of gastro-oesophageal reflux and the description will be directed to methods and apparatus suitable for such investigation.

Gastro-oesophageal reflux is a common disorder with potentially severe long term complications. Investigation of patients with symptoms of this disease has been hampered by the imprecise nature of the investigational techniques available. The use of 24-hour oesophageal pH monitoring has been proposed and would appear greatly to facilitate the diagnosis allowing characterisation of the nature, pattern and extent of the disease.

A standard method for monitoring oesophageal pH involves the use of a narrow bore intra-luminal pH probe linked to a pen recorder. The method requires that the patient be confined to bed and the pen recorder is placed at the bedside.

The bedside recording method severely restricts activity and introduces an artificial stimulus affecting the patient's choice of position during the test period, for example, between erect and recumbent. Additionally, the patient experiences a different set of stresses in hospital compared with those at home or at work. These factors will influence the extent of reflux observed.

Ambulatory monitoring methods allowing outpatient clinical assessment would have a definite advantage in the evaluation of the intermittently symptomatic patient.

It is an object of the invention to provide a method and apparatus for monitoring pH values, an application of which is in monitoring and analysing oesophageal pH.

According to the invention there is provided apparatus for monitoring the pH value of a substance, comprising means for measuring pH values and for providing a digital output signal representative thereof, means for storing the digital output signals at predetermined intervals and means for analysing the signals stored during a defined period to provide a pH characteristic of the substance over the said period.

Preferably, the means for measuring pH values is, in use, arranged in a substantially fixed position so that the digital output signals are representative of the pH value of the substance at the said fixed position at each predetermined time interval.

The means for measuring pH values and for providing the digital output signal may be a pH probe arranged to provide an analog voltage output signal representative of the measured pH value and an analog to digital converter coupled to receive the analog signal and to generate the digital signal therefrom.

The means for measuring pH value and for providing the digital output signal may comprise a pH radio-telemetry pill arranged to provide an oscillatory signal having a frequency dependent upon the measured pH value. A frequency divider or counter may be provided to derive the digital output signal from said oscillatory signal.

The oscillatory signal from the pH pill may be transmitted to a receiver and the output of the receiver converted to said digital output signal.

The receiver may be, for example, a ferric bar aerial, and its position may be adjustable to obtain maximum received oscillatory signal strength.

The digital signals may be stored in a random access memory (RAM).

The RAM may form part of a microprocessor system arranged selectively to control, inter alia, the predetermined intervals and predetermined periods.

The means for analysing may comprise a computer which may be additional to or incorporate said microprocessor.

An embodiment of the apparatus according to the invention may be used for monitoring oesophageal pH, for example, in the investigation of gastro-oesophageal reflux.

Further, according to the invention there is provided a method for monitoring the pH value of a substance comprising measuring the pH values and providing a digital output signal representative thereof, storing the digital output signals at predetermined intervals and analysing the signals stored during a defined period to provide a pH characteristic of the substance over the said period.

Preferably, the pH values are measured at a substantially fixed position so that the digital output signals are representative of the pH value of the substance at the said fixed position at each predetermined time interval.

The pH values may be measured by a pH probe arranged to provide an analog voltage output signal representative of the measured pH value and an analog to digital converter may be coupled to receive the analog signal and to generate the digital signal therefrom.

The pH value may be measured by a pH radio-telemetry pill arranged to provide an oscillatory signal having a frequency dependent upon the measured pH value and a frequency divider or counter may be provided to derive the digital output signal from said oscillatory signal.

The oscillatory signal from the PH pill may be transmitted to a receiver and the output of the receiver converted to said digital output signal.

The receiver may be, for example, a ferric bar aerial, and its position may be adjusted to obtain maximum received oscillatory signal strength.

The digital signals may be stored in a random access memory (RAM).

The RAM may form part of a microprocessor system arranged selectively to control, _inter alia_, the predetermined intervals and predetermined periods.

The analysis may be performed by a computer which may be additional to or incorporate said microprocessor.

The method according to the invention may be used for monitoring oesophageal pH for example, in the investigation of gastro-oesophageal reflux.

The invention will now be described by way of example with reference to the accompanying drawings, in which:-

FIGURE 1 shows a block circuit diagram of part of an embodiment of the apparatus according to the invention in use;

FIGURE 2 is a logical flow diagram illustrating the operation of apparatus according to the invention when logging pH values (log mode)

FIGURE 3 is a logical flow diagram illustrating the operation of apparatus according to the invention when in an idle mode in which the apparatus is set-up in readiness for a logging operation;

FIGURES 4, 5 and 6 are plots of pH values against time in hours displayed as a print-out from apparatus according to the invention; and,

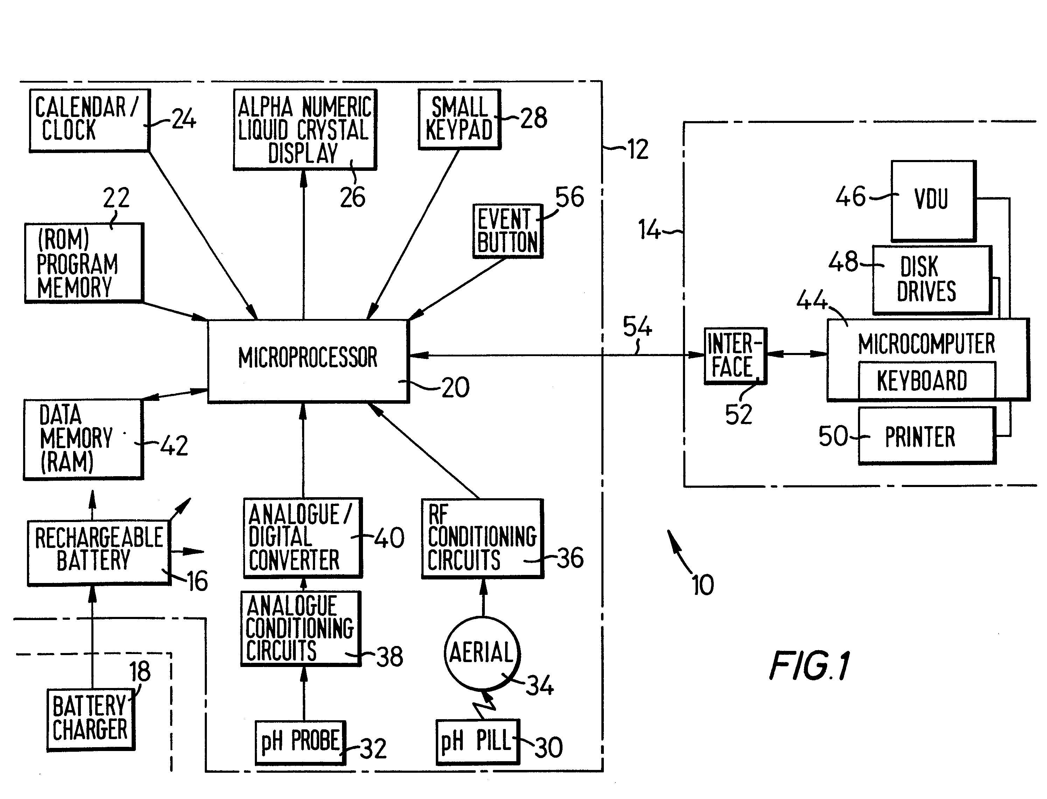

Referring to Fig. 1 there is shown apparatus for monitoring oesophageal pH for use, for example, in the investigation of gastro-oesophageal reflux.

The apparatus 10 is in two parts, one part 12 for data logging, the other part 14 for analysis.

The data logging apparatus 12 is a light weight portable unit powered by rechargeable batteries 16 rechargeable by a detachable battery charger 18. The apparatus 12 is controlled by an 8-bit CMOS microprocessor (MPU) 20 which executes a machine code program held in CMOS Read Only Memory (ROM) 22. Data sampling is governed by a calendar/clock integrated circuit (clock) 24 which signals at appropriate times that the MPU 20 should take a data sample. The clock 24 also maintains a record of the time of day and date. This information is used to identify the start of the data log, and is also transferred to a display 26 during logging. The Liquid Crystal Display (LCD) 26 displays messages in a full alphanumeric character set. The messages show time and data whilst logging, and guide the operator through various sections of the set-up program for the apparatus. During set up, the operator uses a small keypad 28 which allows several routines to be performed including selection of variables such as data logging rate and signal source, correction of the clock 24 and calibration of the pH transducer. The keypad 28 can be removed from the apparatus after it has been set up to prevent interference or changes or inputs to be made by an unauthorised person who may be the person whose pH is being monitored.

Oesophageal pH data can be received from one of two transducers - a pH pill 30, or a probe 32. The pH Pill 30 emits an electromagnetic signal of approximately 400kHz, the exact frequency depending on the pH of the pill's membrane. The signal from the pill 30, which is held in the subject's oesophagus, by a thread, is picked up by a suitable aerial 34, such as a ferric bar aerial outside the subject's body. The signal from the aerial 34 is amplified and filtered before driving a phase locked loop (PPL) with a fairly narrow capture range in an RF conditioning circuit 36. The output from the PPL is fed to the MPU 20 which can measure the frequency sufficiently accurately to give a pH resolution of at least + or - 0.1 pH unit. An alternative source of pH data is the pH Probe 32 which produces a voltage proportional to the pH of its membrane. This voltage is passed into an analogue conditioning circuit 38 where it is amplified in a very high impedance buffer amplifier, filtered to reduce artefacts and a d.c. offset added to it before it is converted to an 8 bit binary value by an analogue to digital converter (ADC) 40. When the clock 24 signals that another data sample is due, the MPU 20 reads the appropriate input (either the PPL frequency or the digital output of ADC 40 according to the set up). A correction is made to the data, using information gathered during the calibration procedure. The data is checked to be within certain bounds and finally it is stored in a bank of CMOS Random Access Memory (RAM) 42.

The analysis is done by a commercial microcomputer 44 with Visual Display Unit (VDU) 46, disk drives 48 and printer 50. The microcomputer 44 runs a suite of specially developed programs which store the logged data on disk, present several analyses of the data on the VDU 46 and produce printout of both the analysis results and graphical representation of the logged data. Data is acquired by the analysing microcomputer via an interface 52 to the data logging unit 12. Data transfer between the logging unit 12 and the interface 52 is by parallel data bus 54 with handshake. The MPU 20 of the logging unit retrieves sequentially data from the banks of RAM 42 and presents the data to the interface 52 ready for the microcomputer 44 of the analyser to store temporarily in its own RAM (not shown).

In one embodiment a radio-telemetry pH pill 30 (for example as supplied by Medici Developments Ltd., London) is positioned in the oesophagus 5 cm. above the lower oesophageal high pressure zone determined manometrically using a perfused catheter system and a slow pull through technique.

Signals from the pill 30 are received and stored by the portable microprocessor receiving unit 12. This unit 12 is calibrated before each patient study by placing the pill in pH 7 and pH 4 buffers; this is repeated in each case immediately following the study to verify pill stability. At the end of the test period the collected oesophageal pH data is transferred from the computer memory 42 of the receiving unit 12 to the computer 44 such as an Apple (trademark) microcomputer for further processing, analysis and permanent storage.

The pill 30 is suspended on a braided nylon surgical suture which has been passed through a narrow silastic tube (outer diameter 1mm) for patient comfort. After the patient swallows the pill the string is adjusted to the desired length and taped to the cheek of the patient. A ferric bar aerial 34 (such as supplied by Rigel Research Ltd., Surrey) is positioned in a harness on the patient's chest anterior to the sternum. The signal strength of the signal received from the pH pill is determined after the aerial is coupled to the microprocessor receiving unit, and adjustment is made in the position of the aerial to obtain maximum signal reception. The microprocessor receiving unit 12 is carried via shoulder strap or waist pouch when the patient is ambulatory.

The microprocessor-controlled portable unit 12 is arranged to receive and store pH data for a predetermined period, for example 24 hours, from the pill. The 8 bit CMOS microcomputer 20 such as supplied by Motorola coordinates and executes all programmed functions. Programs for this microprocessor are held in the CMOS EPROM program chip 22. The actual date and time of day are kept within the system by the calendar-clock CMOS chip (Motorola). The unit runs on five rechargeable 1.2 volt cells 16 and can be used for about 50 hours between charges.

The radio frequency signal received from the pH pill having a frequency of about 400-500 Khz is coupled to the input of the radio frequency divider/counter 36 to provide a digital signal representative of the measured pH value, and the digital data is stored during the test period in four CMOS 2KB RAM chips 42 allowing 8K random access memory. The sampling interval is selectable at the beginning of each test.

The front panel of the receiving unit comprises a 16 character dot matrix liquid crystal display (such as supplied by Hitachi). Events of note to the patient during the test period (e.g. pain, meals, his position) are input to the microprocessor and stored by way of an event button 56 linked to the liquid crystal display 26.

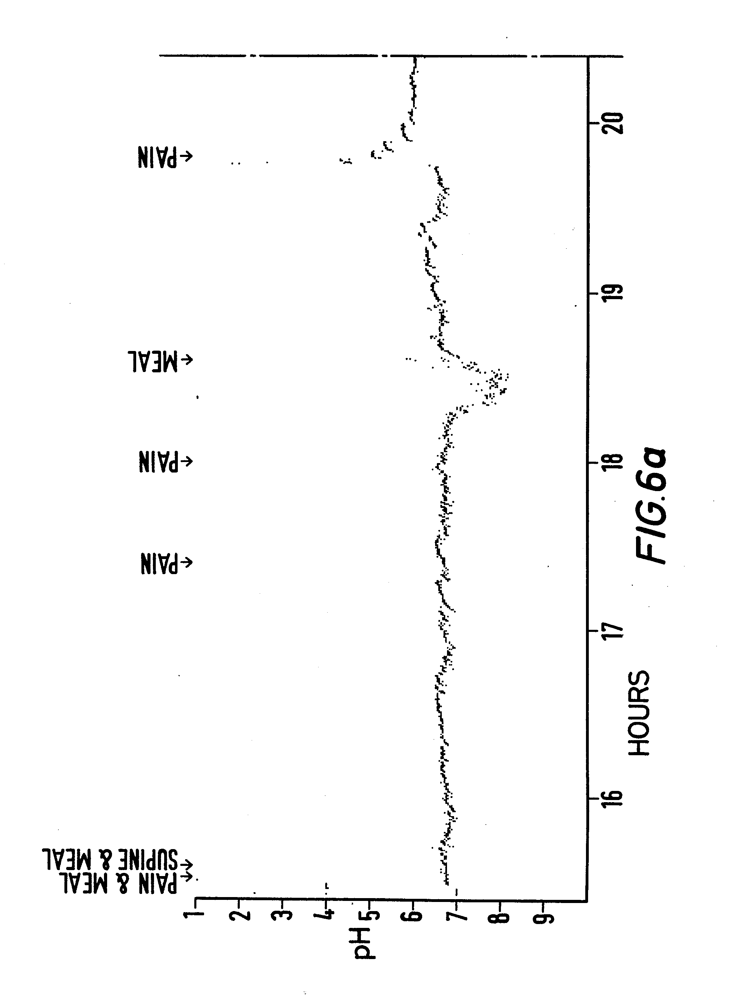

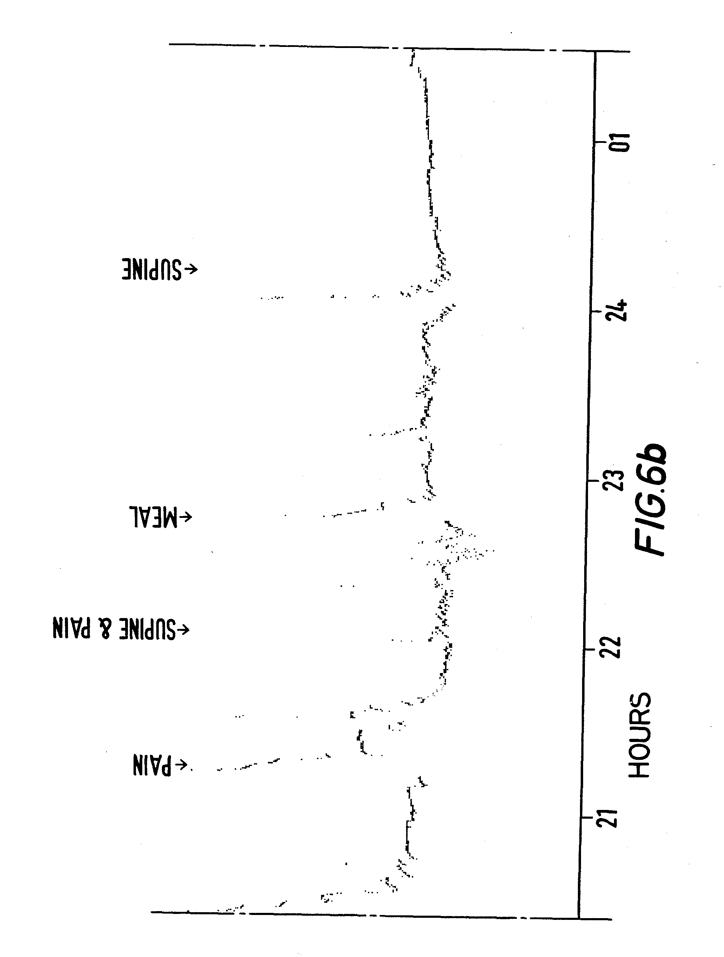

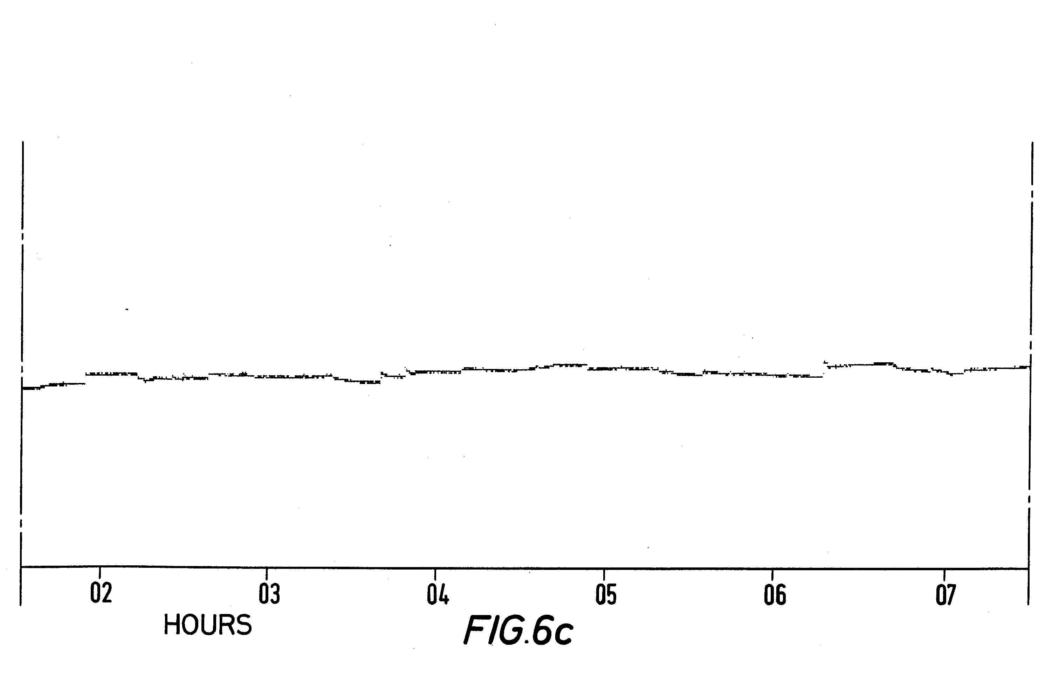

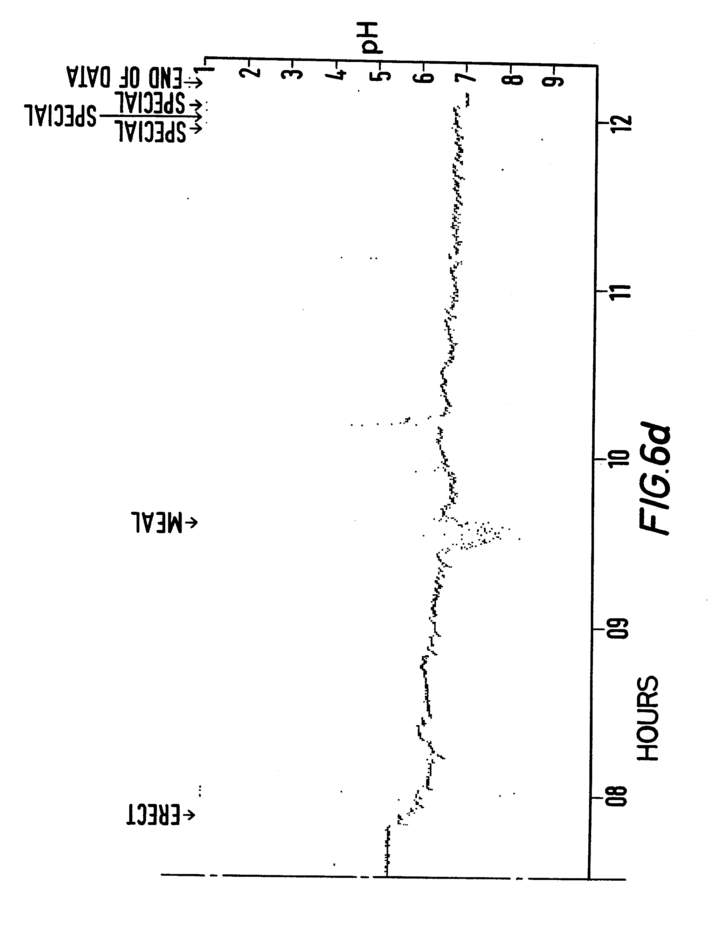

The event button 56 is actuated by the person being monitored to enable a particular event to be recorded. In this embodiment the person would actuate the button once to prime the microprocessor 20 that an event is to be stored and then a series of messages are displayed sequentially on the display 26. A multiple choice message such as "PAIN", "ATE MEAL", "SUPINE", and "ERECT", is programmed to appear on the display 26 allowing input of the specific nature of the signalled event by the person actuating the button 56 for the or each event he wishes to record, i.e. once more for a single message such as "PAIN". The series of messages are displayed twice and if the person does not actuate the button 56 the display terminates and an event entitled "SPECIAL" is recorded. This "SPECIAL" event is useful to indicate later to the operator that the patient had wished to record an event but was unable to select the appropriate event, for example in the case of an old or infirm patient who might not have sufficient co-ordination to actuate the button at the appropriate moment. This information is stored in real time simultaneously with the oesophageal pH data and as such is available in the final computer record without further user input. Examples of such recorded events are shown in Fig. 6. The display is also programmed to communicate signal loss and oesophageal pH throughout the test log period.

The use of a single button 56 to be actuated by the person whose pH is being monitored allows the person to record events of interest or relevance to his condition simply and easily but does not allow him to interfere with the operation of the apparatus 12. As the events are stored in the apparatus 12 for recovery later by the microcomputer 44 and subsequent display with the pH data it facilitates accurate recordal of the kind of event and the time it took place without the need for the person to keep a diary or otherwise rely on his memory. Other information stored automatically is the time the log operation was started, the sampling rate which in one embodiment can be varied from 1 sample per second to 1 sample per 59 seconds in 1 second increments, and the calibration values if the calibration procedure was followed.

In addition, the unit 12 can detect when unreliabe pH data is presented during the logging process and reject it so that it is not stored in RAM 42. Similarly, it can be arranged to reject the information if the magnitude of the r.f. signal is less than a predetermined value or if its frequency is outside preset limits.

The display 26 can also be arranged to signal to the person being monitored that the pH dependant signal to be recorded is unsatisfactory so that he can make or arrange for the necessary adjustments to be made.

Operation of the apparatus 12 during a test log can be terminated if the memory 42 is full, or if the keypad 28 is fitted and the appropriate code is entered thereby, or if the computer apparatus 14 is connected thereto.

In another embodiment of the invention a pH probe 30 (such as supplied by Russell pH, Auchtermuchty, Scotland or Beckman) can be used in place of the pH pill. The pH probe is passed through the nasopharynx to the desired intraoesophageal position and a separate Ag/AgCl disc is attached to the patient's chest as a reference electrode. Analog data generated by the pH probe is coupled to the analog digital converter CMOS chip 40 where it is converted to a digital signal representative of the measured pH values and the output of the A to D converter 40 is coupled to the microprocessor 20.

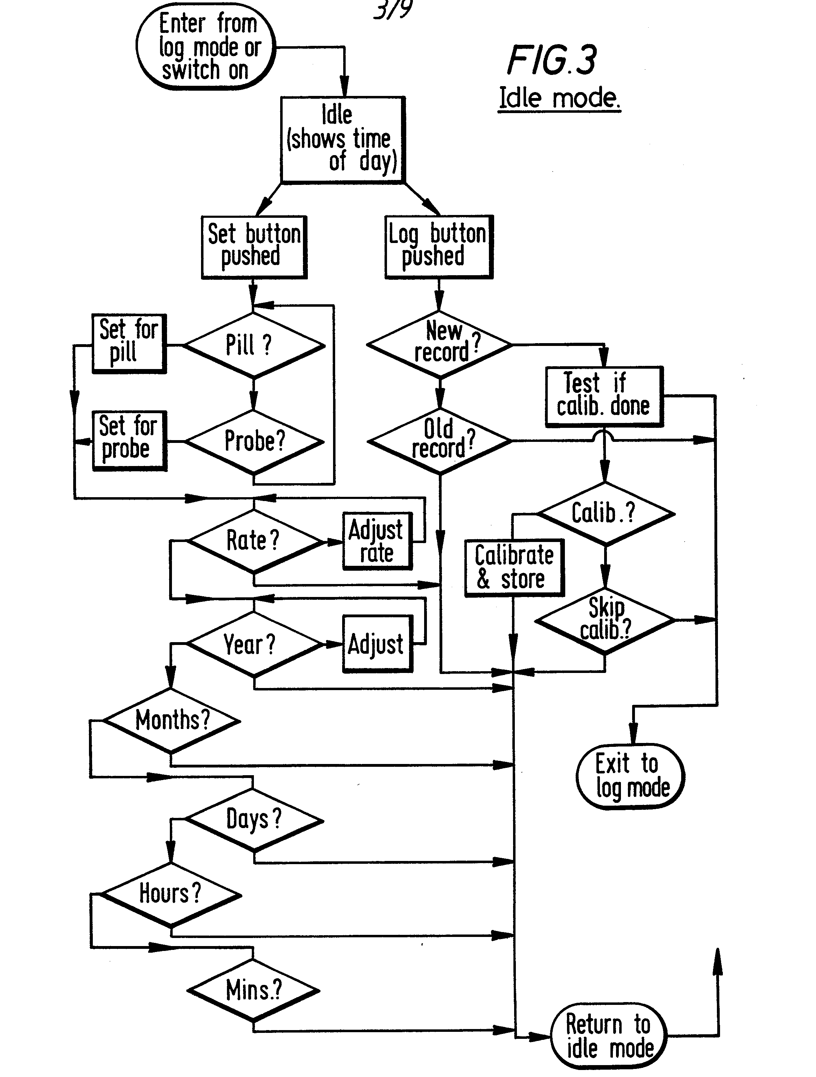

The portable microprocessor receiving unit 12 functions in either an idle mode or a log mode. While in the idle mode (Figure 3) the unit 12 is set up for the next test by selecting for pill or probe use and desired sampling interval. Time of day and date may be adjusted in this mode if necessary, and then the unit reverts to idle mode.

If the log button is actuated, the operator is required to enter whether a new record is to be started or an old record is to be continued. If a new record is to be started, the operator is required to enter information as to whether or not the system has been calibrated; if it has, the unit 12 goes into log mode. If it has not been calibrated the operator has to enter information as to whether calibration is to be effected or whether it can be omitted. If the former, the unit is calibrated, the calibration information stored in RAM 42 and the Unit returns to idle mode. If the latter, the unit is set to log mode.

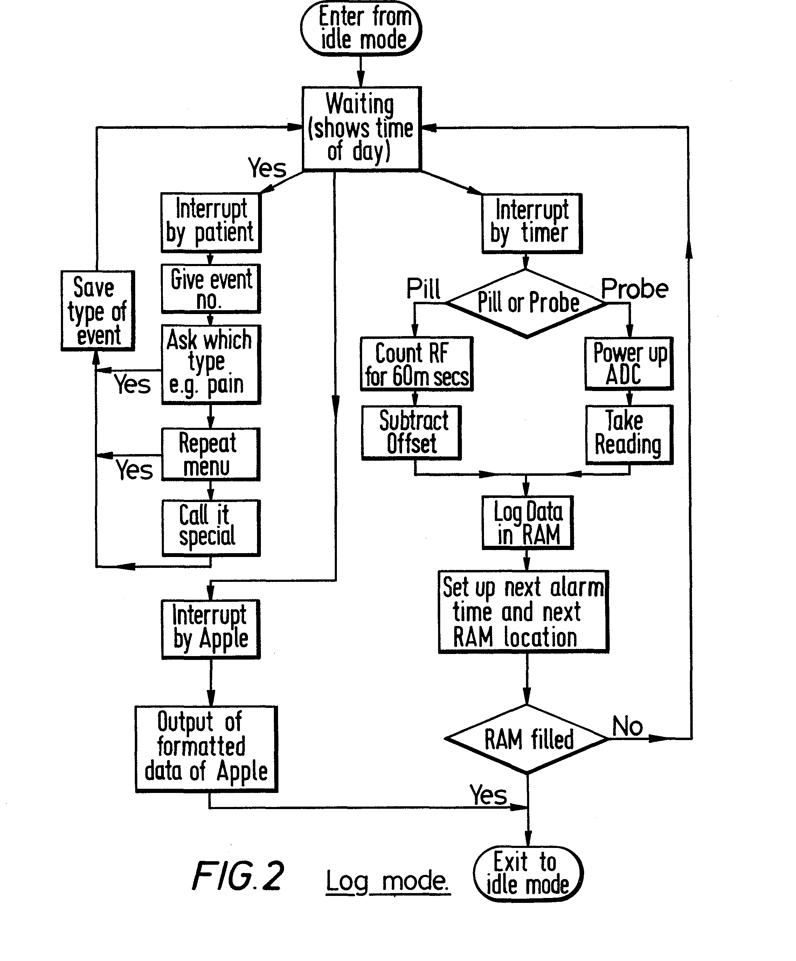

In the log mode (Figure 2) the unit 12 is receiving and logging pH data. After calibration of the pill or probe as the case may be, the microprocessor is programmed to await a signal that intra-oesophageal placement of the pill or probe has been attained prior to logging further pH data. Calibration is repeated at the end of the test period to verify pill/probe stability.

When the radio-telemetry pill is being used a visual display of signal strength is present to assist in positioning of the aerial.

Figures 2 and 3 show flow diagrams indicating the program logic for the portable microprocessor receiving unit and show a detailed account of the options available in the idle and log modes.

In Fig. 2 the right-hand loop is illustrative of the normal logging mode, wherein the timer causes the apparatus to sample the output of the pill 30 or probe 32 as the case may be at the preselected sample rate and to store the sampled pH data in digital form, to set up the next sample time and RAM location and to check whether the RAM 42 is full. If the RAM 42 is not full the loop is completed and the unit is set to take the next pH measurement. If the RAM 42 is full the unit 12 reverts to idle mode.

The left-hand loop of Fig. 2 is illustrative of the facility enabling the patient to enter certain events in the RAM 42 by actuation of the button 56. If the patient actuates the button 56 once this actuation is allocated an event number for eventual storage in the RAM 42 with the event to be recorded. The display 26 then displays in sequence the events such as "PAIN" which can be recorded and the patient actuates the button a second time when the appropriate event is displayed to cause the selected event to be stored (saved). If the button is not actuated a second time the sequence of events is repeated once to enable the patient to have a second opportunity to actuate the button. If the button is again not actuated the event is labelled "SPECIAL" and recorded. While the other events have a specific meaning such as "pain" or "eating a meal", the event "SPECIAL" merely indicates that the patient had actuated the button once in an attempt to record some change which might be of interest.

The third loop leading to the block labelled "Interrupt by Apple (computer)" is illustrative of the situation when the microprocessor unit 12 is coupled to unit 14 when the information in RAM 42 is transferred to the computer unit 14 for analysis and calibration and then the unit 12 is caused to revert to idle mode.

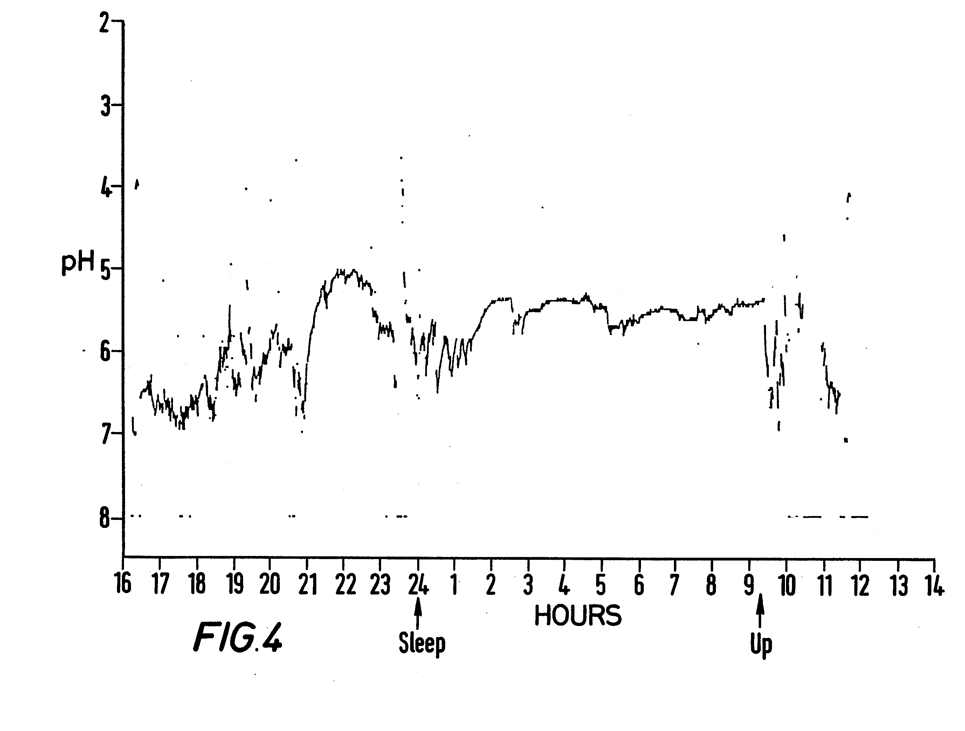

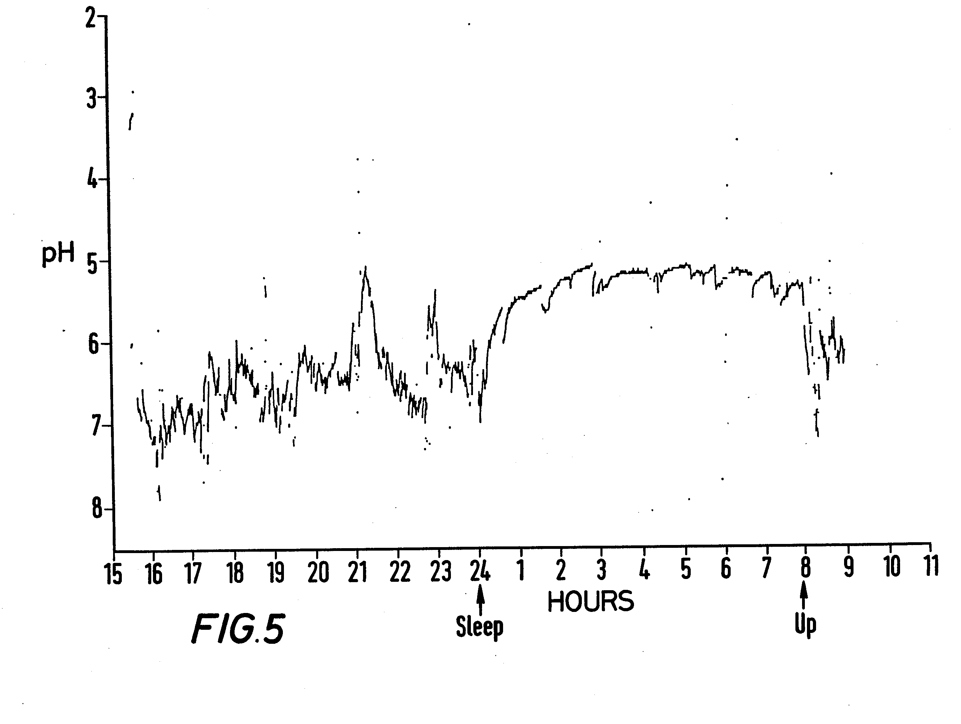

At the conclusion of a test period the pH data is transferred to the computer 14 for storage, plotting and analysis. Initial plots of oesophageal pH versus time-of-day are instantaneously screened and analysis performed. Graphic programs for a printer/plotter are included for useful hardcopy display of data (Figures 4,5). Data storage on hard disc, for example, through a Corvus OMNINET linkage allows large storage space with rapid recall.

The computer has been programmed to identify all data points representing pH $\langle 4$ or pH$\rangle$ 8. The time in minutes of oesophageal exposure to pH $\langle 4$ or pH$\rangle$ 8 per hour of study is then reported as the total acid or alkaline reflux time. The computer examines the pattern of these data points to identify groups of points below pH 4 or above pH 8 sequentially during data collection. These are defined as reflux events. If required, the program can be modified to re-interpret the data to show reflux above or below any other selected pH value.

Signal loss is identified and reported as a percentage of the total data points. Reflux events terminated by signal loss are so indicated in the final analysis. The receiving unit requires a certain signal strength threshold in order to log a data point; a weak signal is thus recorded as signal loss to prevent erroneous data collection.

The analysis printout contains:-

a) graph of 24 hour oesophageal pH versus time of day;

b) list of reflux events showing time of occurrence and duration;

c) total acid/alkaline reflux time;

d) number of acid/alkaline reflux events per hour;

e) average duration of reflux event;

f) separate analysis of data from supine/erect periods;

g) association of reflux events with pain/meals;

h) percent signal loss.

By the use of computer-based data collection, according to the invention, the processing and analysis can greatly simplify 24 hour pH monitoring. The use of a portable microprocessor receiving unit can facilitate outpatient testing which should provide reliable information on the patient's reflux status in his home/ work environment. The pH pill may prove more popular with patients but any inability of a few patients to swallow the pH pill and/or if the signal reception is poor in the case of exceptionally obese individuals, the probe can be used.

If drift of pH measurement occurs over the 24 hour study period using the pill system, this can be minimised by using the pill only during the proper operating life of the mercury power cell. The probe-based system is not expected to have significant problems with signal loss or drift.

Several characteristics of the computer-based system are expected to prove useful in the clinical setting. Data collection under microprocessor control will allow continuous evaluation of the quality of the incoming information throughout the test period. This will be particularly useful with the radio-telemetry pill system; the patient is immediately made aware of signal weakness and loss and can make necessary adjustments in aerial position. The entry of specific events as part of the original data record will allow accurate correlation of oesophageal pH with important patient activities or symptoms.

The instantaneous plotting and analysis available with the computerised system will facilitate the use of 24 hour oesphageal pH monitoring as a routine clinical tool.

The establishment of appropriate parameters to define reflux becomes important in the interpretation of these tracings. From the research perspective multiple analysis programs can be devised allowing the computer quickly to analyse the raw data according to any one of a number of reflux definitions.

Finally, the computer can uniformly apply the designated interpretive parameters to data from both asymptomatic volunteers and symptomatic reflux patients identifying trends and associations of oesophageal pH within these groups.

Refinement and standardisation of interpretive parameters should result using these approaches.

Computerised ambulatory oesophageal pH monitoring will represent a significant technical advance in the performance of a clinically powerful investigation for gastro-oesophageal reflux. Microprocessor controlled data collection and analysis will allow innovative approaches to the handling of oesophageal pH data and will promote a clearer understanding of reflux physiology.

Figures 4, 5 and 6 show plots of pH value against time in hours obtained during development of apparatus according to the invention.

In Figure 6, as can be seen from the computer print-out, the microprocessor system which a patient can carry with him, will allow the patient to interact and indicate various events during the day including the occurrence of pain.

In this example, the patient indicated five episodes of pain, two of which was associated with a fall in the pH value in the oesophagus to 3 to 4, indicating reflux of acid from the stomach into the gullet.

The potential clinical application of this device extends to every medical discipline in which pH monitoring is of some import. Additionally the device has a wide application for laboratory, industrial and veterinary use as a small portable device for prolonged pH monitoring. A computerised record of pH stability over prolonged periods would be exceptionally useful in many industrial circumstances in which product quality is contingent on pH control.

CLAIMS

1.　Apparatus for monitoring the pH value of a substance, comprising means for measuring pH values and for providing a digital output signal representative thereof, means for storing the digital output signals at predetermined intervals and means for analysing the signals stored during a period including a plurality of said intervals to provide a pH characteristic of the substance over the said period.

2.　Apparatus according to claim 1, for monitoring oesophageal pH of a person, wherein the means for measuring pH values is adapted to be positioned in the oesophagus.

3.　Apparatus according to claim 2, wherein the means for storing the digital signals representative of the monitored pH valves is a memory which forms part of portable data logging apparatus adapted to be carried by the person.

4.　Apparatus according to claim 3, wherein the data logging apparatus comprises a microprocessor arranged selectively to control the said predetermined intervals and predetermined period.

5.　Apparatus according to claim 4, wherein the data logging apparatus comprises actuating means having an output coupled to an input of the microprocessor means, said actuating means being operable by the person whose pH is being monitored to cause an event signal to be stored in said means for storing in real time with the oesophageal pH data signal.

6. Apparatus according to claim 5, wherein the data logging apparatus comprises a display means having an input coupled to a display drive output of the microprocessor means, the display means being arranged on a first actuation of said actuating means to display in sequence a series of event messages whereby the person can select and cause to be stored at least one of said event messages by actuation of the actuating means when said message is displayed.

7. Apparatus according to claim 6, wherein said display means is arranged to display said series of event messages a plurality of times and on failure to select one of said event messages by a second actuation of the actuating means a "special" event message is caused to be stored.

8. Apparatus according to claim 7, wherein the data logging apparatus comprises a removeable keypad for entering required operating routines and parameters, such as the predetermined intervals and period, into the microprocessor.

9. Apparatus according to claim 7, wherein said microprocessor means is arranged to detect the receipt of unreliable pH data during a monitoring period and to store and display in real time the presence of such unreliable data.

10. Apparatus according to claim 6, wherein the means for analysing the stored digital signals representative of pH comprises a computer arranged to be coupled to said data logging means.

11. Apparatus according to claim 10, wherein said computer comprises display means arranged to display the analysed pH data together with associated event messages.

12. Apparatus according to claim 10, wherein said computer comprises means for printing the analysed pH data together with associated event messages.

13. Apparatus according to claim 2, wherein the means for measuring pH values and for providing the digital output signal is a pH probe arranged to provide an analog voltage output signal representative of the measured pH value and an analog to digital converter coupled to receive the analog signal and to generate the digital signal therefrom.

14. Apparatus according to claim 2, wherein the means for measuring pH value and for providing the digital output signal comprises a pH radio-telemetry pill arranged to provide an oscillatory signal having a frequency dependent upon the measured pH value.

15. Apparatus according to claim 14, wherein the oscillatory signal from the pH pill is transmitted to a receiver secured on said person and the output of the receiver converted to said digital output signal, the position of said receiver being adjustable to obtain maximum received oscillatory signal strength.

16. A method for monitoring the pH value of a substance comprising measuring the pH values and providing a digital output signal representative thereof, storing the digital output signals at predetermined intervals and analysing the signals stored during a period including a plurality of said intervals to provide a pH characteristic of the substance over the said period.

17. A method according to claim 16, wherein the pH measurements are made in a predetermined position in the oesophagus of a person and the method further comprises the step of generating event message signals under the control of the person and storing said event message signals in real time with said signals representative of the pH values.

FIG.1

CALENDAR / CLOCK — 24

ALPHA NUMERIC LIQUID CRYSTAL DISPLAY — 26

SMALL KEYPAD — 28

22

(ROM) PROGRAM MEMORY

EVENT BUTTON — 56

12

14

MICROPROCESSOR — 20

DATA MEMORY (RAM) — 42

RECHARGEABLE BATTERY — 16

ANALOGUE / DIGITAL CONVERTER — 40

RF CONDITIONING CIRCUITS — 36

ANALOGUE CONDITIONING CIRCUITS — 38

AERIAL — 34

BATTERY CHARGER — 18

pH PROBE — 32

pH PILL — 30

54

INTER-FACE — 52

44

MICROCOMPUTER

KEYBOARD

46 — VDU

48 — DISK DRIVES

50 — PRINTER

10

1/9

0138402

0138402

```
        ┌──────────┐
        │Enter from│
        │idle mode │
        └────┬─────┘
             │
             ▼
        ┌──────────┐
        │ Waiting  │
        │(shows time│◄──────────────────────────┐
        │ of day)  │                            │
        └──────────┘                            │
   Yes  ╱    │    ╲                             │
```

**Interrupt by patient** (Yes)

**Give event no.**

**Ask which type e.g. pain** — Yes → **Save type of event**

**Repeat menu** — Yes

**Call it special**

**Interrupt by Apple**

**Output of formatted data of Apple**

**Interrupt by timer**

**Pill or Probe**

Pill → **Count RF for 60 m secs** → **Subtract Offset**

Probe → **Power up ADC** → **Take Reading**

**Log Data in RAM**

**Set up next alarm time and next RAM location**

**RAM filled** — No → (back to Waiting)

Yes ↓

┌──────────┐
│ Exit to  │
│idle mode │
└──────────┘

*FIG.2*    Log mode.

3/9

0138402

FIG.3
Idle mode.

FIG.4

Sleep

Up

HOURS

pH

4/9

0138402

FIG.5

0138402

FIG.6a

FIG.6b

HOURS

*FIG.6c*

FIG.6d